(19) **Europäisches Patentamt**

**European Patent Office**

**Office européen des brevets**

(11) Veröffentlichungsnummer: **0 276 255 B1**

(12) **EUROPÄISCHE PATENTSCHRIFT**

(45) Veröffentlichungstag der Patentschrift: **03.03.93**

(21) Anmeldenummer: **87904678.7**

(22) Anmeldetag: **20.07.87**

(86) Internationale Anmeldenummer:
**PCT/DE87/00324**

(87) Internationale Veröffentlichungsnummer:
**WO 88/00661 (28.01.88 88/03)**

(51) Int. Cl.⁵: **F16D 25/061, B60T 1/00**

(54) **SCHALTKUPPLUNG, INSBESONDERE FÜR AUTOMATISCH SCHALTBARE KRAFTFAHRZEUGGETRIEBE.**

(30) Priorität: **23.07.86 DE 3624894**
**14.01.87 DE 3700813**

(43) Veröffentlichungstag der Anmeldung:
**03.08.88 Patentblatt 88/31**

(45) Bekanntmachung des Hinweises auf die
Patenterteilung:
**03.03.93 Patentblatt 93/09**

(84) Benannte Vertragsstaaten:
**DE FR GB IT SE**

(56) Entgegenhaltungen:
**CH-A- 0 224 022     DE-A- 1 575 802**
**DE-A- 3 121 694     DE-A- 3 237 096**
**DE-B-11 933 17      DE-C- 0 686 130**
**FR-A- 2 217 589     GB-A- 1 050 930**
**US-A- 2 428 336     US-A- 2 710 086**
**US-A- 3 272 295     US-A- 3 679 032**

(73) Patentinhaber: **Meyerle, Michael**
**Kiefernweg 9**
**W-7996 Meckenbeuren(DE)**

(72) Erfinder: **Meyerle, Michael**
**Kiefernweg 9**
**W-7996 Meckenbeuren(DE)**

(74) Vertreter: **Münich, Wilhelm, Dr. et al**
**Kanzlei Münich, Steinmann, Schiller**
**Wilhelm-Mayr-Str. 11**
**W-8000 München 21 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltkupplung nach dem Oberbegriff des Patentanspruches 1.

Eine derartige Schaltkupplung ist nach der US-A-2,428,336 bekannt. Diese Schaltkupplung stellt eine Einzelkupplung dar, die nicht für die Bereichsschaltung automatischer Stufengetriebe oder stufenloser Getriebe für Kraftfahrzeuge geeignet ist.

Aufgabe der Erfindung ist es, eine Kupplungseinrichtung zu schaffen, die für die Bereichsschaltung automatischer Stufengetriebe oder stufenloser Getriebe für Kraftfahrzeuge geeignet ist.

Die erfindungsgemäße Schaltkupplung bietet gegenüber der bekannten Kupplung die weiteren Vorteile, daß sie wirtschaftlich und kostengünstig herstellbar ist, eine kleine kompakte Bauweise für mehrere Kupplungen in einem Kupplungspaket gestattet, frei von Schleppverlusten ist im Gegensatz zu den bekannten Lamellenschaltkupplungen und somit wesentlich zur Wirkungsgradverbesserung beiträgt, unter Last bei Synchronlauf oder niedrigen Relativdrehzahlen schaltbar ist, entsprechend den Forderungen der Bereichsschaltungen bei stufenlosen Getrieben, und daß sie unter Last geöffnet werden kann.

Die Aufgabe wird durch die in Anspruch 1 aufgeführten Merkmale gelöst. Weitere vorteilhafte Ausgestaltungen gehen aus den Unteransprüchen der Beschreibung hervor.

Die Erfindung wird an Ausführungsbeispielen anhand von Zeichnungen erläutert. Es zeigen:

Fig. 1    vier Kupplungen zu einen Kupplungspaket zusammengefaßt im Schnitt dargestellt

Fig. 2    eine weitere Ausführung der Kupplungen

Fig. 3    einen Teilschnitt X durch die Kupplungsverzahnung bei geöffneter Kupplung

Fig. 4    einen Teischnitt X durch die Kupplungsverzahnung bei geschlossener Kupplung

Fig. 5    einen Teilschnitt X durch die Kupplungsringe bei geschlossener Kupplung

Fig. 5a   einen Teilschnitt X durch die Kupplungsringe mit einer weiteren Form des Kupplungsprofils.

Fig. 6    Teilschnitt eines Kupplungspaketes mit zwei Kupplungen mit doppelwirkenden Druckkolben

Fig. 7    weitere Kupplungsausführungen

Fig. 8    Kupplungsausführung mit gehäusefesten Kupplungselementen.

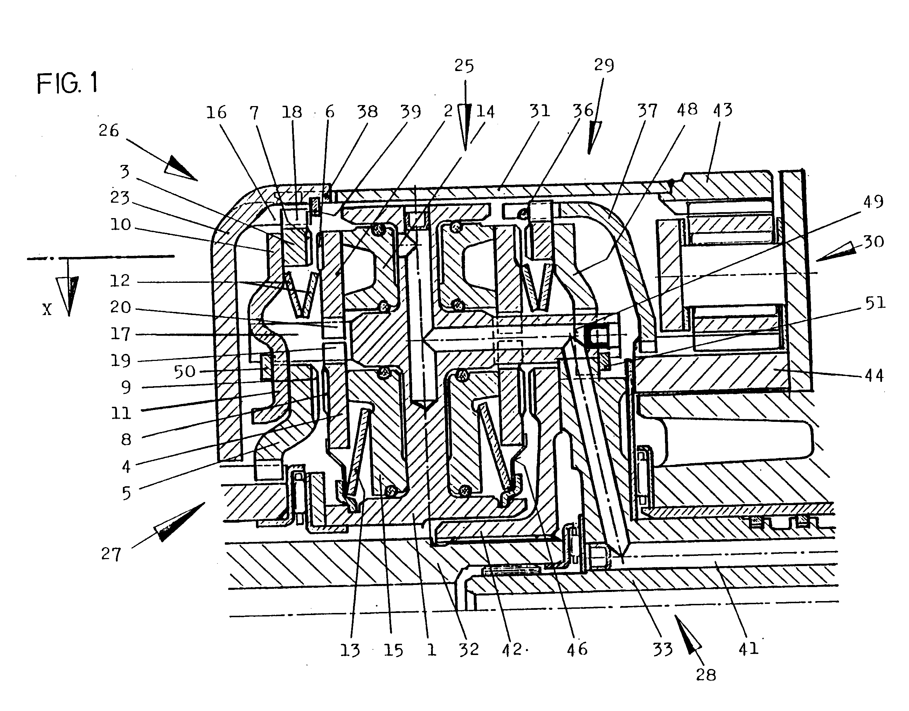

In Fig. 1 sind auf einem Kupplungsträger 1 vier Kupplungen 26, 27, 28, 29 angeordnet. Jeder Kupplung ist ein Druckkolben 14, 15 zugeordnet, der mit Öldruck beaufschlagbar ist. Auf den Kupplungsträger 1 ist drehfest eine Druckplatte 10; 11 sowie ein Kupplungsring 2; 4 ebenfalls drehfest gelagert. Über ein Federelement 12; 13 wird der Kupplungsring 2; 4, sowie der Kolben 14; 15 in Neutrallage zurückgedrückt. Der mit dem ersten Kupplungsring 2 zu verbindende Kupplungsring 3 ist drehfest am äußeren Umfang mit seinen Mitnehmern 18 in Ausnehmungen 16 der Kupplungsglocke 23 gelagert. Bei Kupplung 27 greift der Kupplungsring 4 am äußeren Umfang mit seinen Mitnehmern 19 in Ausnehmungen 17 des Kupplungsträgers 1 ein und ist mit dem Kupplungsring 5, der auf einer Außenverzahnung einer Welle sitzt, über die Kupplungsprofile 8 und 9 verbindbar.

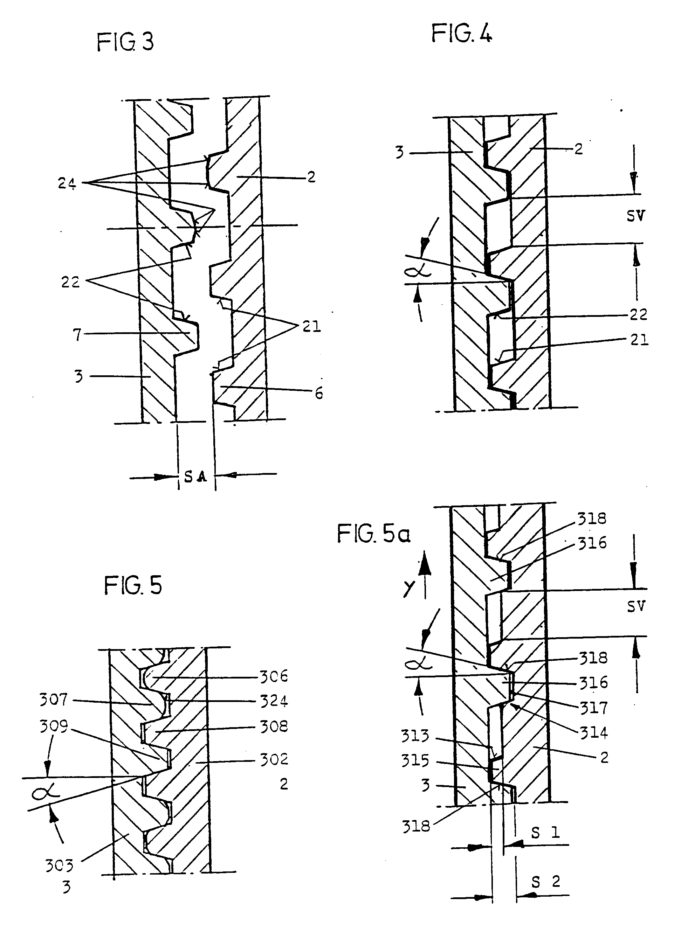

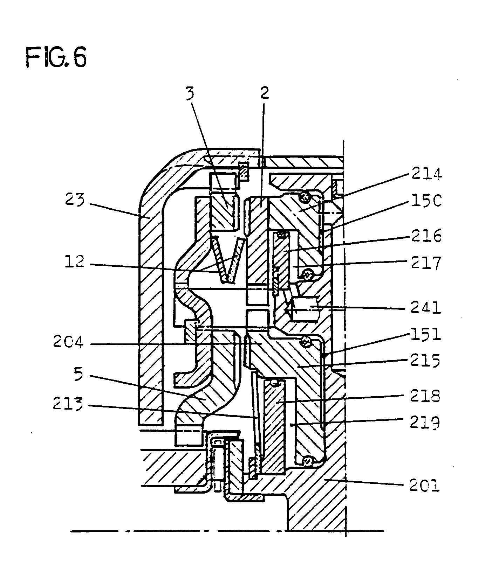

Beim Schalten, z.B. der Kupplung 26, wird z.B. durch Öldruck über die Druckleitung 41 der Kolben 14 beaufschlagt. Gegen den Druck der Feder 12 wird der Kupplungsring 2 mit seinem Kupplungsprofil 6 in das Kupplungsprofil 7 des Kupplungsringes 3 eingerückt. Damit ist eine Verbindung zwischen der Kupplungsglocke 23 und dem Kupplungsträger 1 hergestellt. Das Kupplungsprofil 7 bzw. 6 der Kupplungsringe 3 bzw. 2 ist vorzugsweise mit Schrägflächen 22 bzw. 21 entsprechend dem Winkel $\alpha$ Fig. 4 und 5 ausgebildet. Durch das Drehmoment wird entsprechend dem in axialer Richtung verlaufenden schrägen Winkel $\alpha$ eine axiale Kraftkomponente in Richtung Öffnen der Kupplung erzeugt. Diese Kraftkomponente stellt sicher, daß die Kupplung im Lastzustand nach Auslösung des Öffnungsimpulses der Kupplung durch Abfall des Öldruckes zuverlässig und sicher öffnet. Das Kupplungsprofil 6 bzw. 7 kann in Axialrichtung sehr kurz ausgebildet werden - je nach Anwendungsfall und Drehmomentbeanspruchung weniger als 1 mm - um den Kolbenhub für den Kolben 14 bzw. die erforderliche Schaltölmenge auf ein Mindestmaß zu reduzieren. Auch der erforderliche Öldruck kann relativ niedrig gehalten werden, da es in den meisten Anwendunsgsfällen reicht, wenn die Schrägflächen 21, 22 des Kupplungsprofiles 6, 7 unter einem Winkel $\alpha$ ausgebildet werden, der nur wenig größer ist als der maximale Reibungswinkel innerhalb der Mitnahmeflächen des Kupplungsprofiles und der Mitnehmer 20; 21. Das bedeutet, daß entsprechend geringe Axialkraft erforderlich ist, um die Kupplung geschlossen zu halten. Die Feder 12 kann mit entsprechend hoher Federkraft dimensioniert werden, um in allen Betriebszuständen, d.h. auch bei niedrigen Drehmomenten ein schnelles Öffnen der Kupplung gegen den Druck des Kolbens 14 und gegebenenfalls des Rotationsdruckes im Kolbenraum im ausgeschalteten Zustand zu gewährleisten.

Je nach den spezifischen Forderungen des Getriebes bietet dieses Kupplungssystem verschiedene Schaltcharakteristiken. Z.B. bei Anwendung in einem stufenlosen Kraftfahrzeuggetriebe mit mehreren Schaltbereichen besteht die Forderung, daß bei annäherndem Synchronlauf der Kupplungselemente ein Kupplungswechsel statt-findet. Ist beispielsweise die Kupplung 26 die erste Bereichskupplung und die Kupplung 27 die zweite Bereichskupplung, so kann der Schaltablauf wie folgt stattfinden: Die Kupplung 26 ist bis zum Ende des ersten Schaltbereiches geschlossen. Zu Beginn des zweiten Fahrbereiches haben die Kupplungsringe 4 und 5 nahezu Synchronlauf erreicht, wonach in der Regel automatisch der Schaltimpuls zum Schliessen dieser Kupplung erfolgt. Nach Beaufschlagung des Kolbens 15 wird der Kupplungsring 4 mit seinem Kupplungsprofil 8 in das Gegenprofil 9 des Kupplungsringes 5 eingerückt. Sobald im eingerückten Zustand der Kolben 15 mit vollem Druck beaufschlagt ist, kann, ausgelöst durch diesen Druckimpuls, das Signal zum Öffnen der Kupplung 26 ausgelöst werden, indem spontan der Öldruck in der Leitung 41 auf Null abfällt und der Kolben 14 sowie der Kupplungsring 2 über die Feder 12 in die Neutrallage zurückgedrückt wird. Reicht die Federkraft der Feder 12 für ein spontanes Öffnen der Kupplung nicht aus, so wird durch die aus der Schrägfläche 21; 22 des Kupplungsprofils 6; 7; 8; 9; 206;257; 308; 309 über den Winkel α resultierende Axialkraft der Öffnungsvorgang der Kupplung beschleunigt, solange noch ein Drehmoment in die eine oder andere Drehrichtung der Kupplung 26 vorhanden ist.

Im Hinblick darauf, daß die Schaltung von einem in den anderen Schaltbereich möglichst nahtlos und ohne Lastunterbrechung abläuft, wird das Signal zum Öffnen der auszuschaltenden Kupplung vorzugsweise durch den Öldruck der Folgekupplung, d.h. der neu geschalteten Kupplung, ausgelöst, indem entweder durch das Drucksignal dieser Folgekupplung ein Öffnungssignal auf hydraulischem Wege auf das Schaltventil der zu öffnenden Kupplung ausgelöst wird oder daß über ein elektrisches Rückmeldesignal aus dem Öldruck der Folgekupplung das Schaltventil der zu öffnenden Kupplung direkt ansteuert oder gegebenenfalls über die Elektronik den Befehl zum Öffnen der anderen Kupplung erteilt.

Für manche Anwendungsfälle ist es zweckmäßig, den Druckkolben 214;215 ( Fig. 6) mit doppelseitiger Druckbeaufschlagung auszubilden, d. h. daß der Kolben durch einen Öldruck im Kolbenraum 217; 219 in Neutrallage zurückgeführt wird. Diese Einrichtung ist insbesondere dann sinnvoll, wenn eine besonders schnelle und gezielte Rückführung des Druckkolbens und der Kupplungsringe in Neutrallage erforderlich ist oder wenn die Federkräfte der Feder 12, 213 nicht ausreichend dimensioniert werden können. Durch diese Einrichtung können die Rückschubfedern 12 bzw. 213 in manchen Fällen auch ganz entfallen und zwar dann, wenn ein dauernder Rüchstelldruck in den Kolbenraum 217; 219 gegeben ist, der relativ niedrig gehalten werden kann. Der Rückstelldruck im Kolbenraum 217 bzw. 218 kann zur Beschleunigung des Schaltvorganges während der Schaltphase kurzzeitig angehoben werden, um den Druckkolben 214, 215 schnell in Neutrallage zurückzuführen. Nach einer anderen Steuerungsart kann z.B. der Druck zur Rückführung des Kolbens gleichzeitig der Kupplungsdruck der Folgekupplung, d.h. der zu schaltenden Kupplung sein, der entweder nur während der Schaltphase auf den Kolben der auszuschaltenden Kupplung wirkt oder auch während der gesamten ausgeschalteten Zeit anhält. Hierbei resultiert die Anpreßkraft auf die Kupplungsringe 2, 3 aus der Differenzkolbenfläche der Kolbenräume 150 und 217 bzw. 151 und 219 und dem Öldruck. Der Kolbenstützring 216; 218 kann je nach konstruktiven Gegebenheiten ein separates Bauteil, wie in Fig. 6 dargestellt, oder mit dem Kupplungsträger einteilig ausgeführt sein.

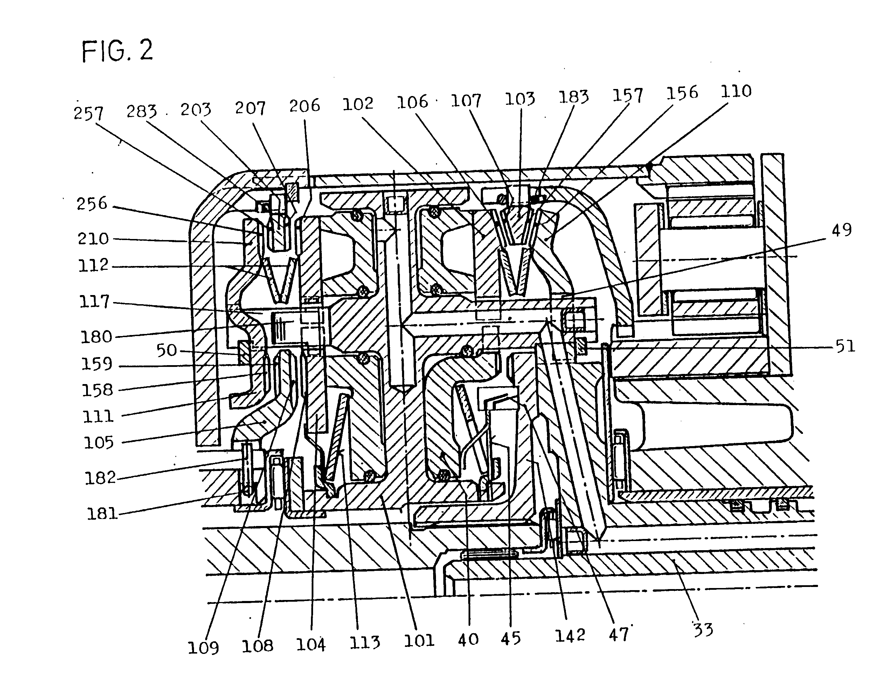

Es ist in manchen Anwendungsfällen zweckmäßig, das Kupplungsprofil mit Verdrehspiel SV auszubilden. Dies hat den Vorteil, daß im Schaltvorgang ein schnelleres Einrasten der Kupplungsglieder ermöglicht wird. Insbesondere dann, wenn vor dem Schaltvorgang noch eine größere Abweichung vom Synchronlauf der Kupplungselemente gegeben ist. Innerhalb dem Verdrehweg SV kann im Schließvorgang Differenzdrehzahl ausgeglichen werden. Höhere Abweichungen vom Synchronlauf können auch dadurch vorteilhaft ausgeglichen werden, indem durch eine Feder 180; 181 ein Kupplungsring 104 bzw. 105 durch Federkraft im Umfangsspiel begrenzt verdrehbar gelagert ist. Innerhalb der Schaltzeit kann dann dieser Kupplungsring sich entsprechend der Relativdrehzahl bis zum vollen Einrasten drehmomentfrei verdrehen. Ein Verdrehspiel SV, wie in Fig. 4 und 3 dargestellt, ist bei dieser Ausführungsform nicht erforderlich. Es können, wie in Ausführung nach Fig. 5 dargestellt, entsprechend mehr Kupplungszähne angebracht werden zugunsten niedrigerer Flächenpressung oder zugunsten eines niedrigeren Schaltprofiles und somit eines kleineren Schaltweges SA. Die Feder 180; 181 kann beliebig als Drehfeder, wie in Fig. 2 dargestellt, oder als Flachfeder oder in Form eines Gummielementes ausgebildet werden.

Mit Rücksicht auf das wechselnde Zug- und Schubverhalten bei Kraftfahrzeugen ist die Kupplung vorzugsweise so ausgelegt, daß kein oder nur geringes Verdrehspiel, sowohl in der Kupplungsverzahnung als auch zwischen den Flächen der Mitnehmer 20 bzw. 19 und den Ausnehmungen 17 vorhanden ist. Eine nahtlose Bereichsschaltung ohne Lastunterbrechung wird auch bei dieser Ausführungsform erzielt und zwar dadurch, daß in der Schaltphase über das Steuerungssystem gezielt eine gewisse Differenz-Drehzahl bzw. Relativdrehzahl zwischen den beiden zu schaltenden Kupplungsringen in eine oder in beide Drehrichtungen kurzzeitig erzeugt wird, um ein sicheres Einrasten zu ermöglichen. Über die Elektronik ist es relativ einfach, diesen Effekt zu erzeugen.

Für den Fall hoher Drehmomentbelastungen wird ein Kupplungsring 103; 105; 203 doppelseitig mit einem Kupplungsprofil 107; 157; 109; 159; 207; 257 ausgebildet. Die Druckplatte 110; 111; 210 ist hierbei ebenfalls mit einem Kupplungsprofil 156; 158; 256 versehen. Voraussetzung bei dieser Ausführung ist es, daß der beidseitig mit einem Kupplungsprofil versehene Kupplungsring 103; 105; 203 axial verschiebbar gelagert ist und vorzugsweise über eine Feder 183, 181, 283 in der Neutrallage arretiert ist.

Die Feder 181 besitzt neben der axialen Federarretierung zusätzlich die Funktion der federnden Rückführung des Kupplungsringes in Umfangsrichtung in seine Mittellage bei neutraler Kupplungsstellung innerhalb einem begrenzten Verdrehspiel.

Das Kupplungsprofil 6; 7 ist vorzugsweise mit Abweisflächen bzw. Schlupfflächen 24, Fig. 3, versehen, um den Einrastvorgang zu verbessern und vorallem, um im geöffnetem Zustand bei Einsparung einer axialen Arretierung eines Kupplungsringes diesen in die Neutrallage bei Relativdrehzahl zurückzuhalten.

Die einzelnen Bauteile der Schaltkupplung können nach wirtschaftlichen Fertigungsmethoden gefertigt werden. Der Kupplungsring 2; 3; 4; 5; 304; 305 kann als Blechpräge- und Stanzteil bzw. Feinstanzteil oder als Präzisionsschmiedeteil oder als Fließpressteil einschließlich dem Kupplungsprofil spanlos hergestellt werden. Der Kolben 14 wird zweckmäßigerweise als Druckgußteil gefertigt. Kolben und Kupplungsring sind einteilig ausführbar, vorzugsweise als Fließpressteil oder auch nach Ausführung 40 als Blechprägeteil. Der Kupplungsträger ist als Sinterteil oder als Druckgußteil (AL-Guß) für höhere Stückzahlen kostengünstig herstellbar.

Nach Ausführung Fig. 1 sind vier Kupplungen 26, 27, 28, 29 zu einer Einheit zusammengefaßt, wobei jeweils zwei Kupplungen übereinander angeordnet sind. Z.B. kann die Kupplung 26 als erste Bereichskupplung, die Kupplung 27 als zweite Bereichskupplung, die Kupplung 28 als dritte Bereichskupplung und die Kupplung 29 als Rückwärtsbereichskupplung dienen. Alle Kupplungen haben ein gemeinsames Kupplungsglied und zwar bei dieser Ausführung den Kupplungsträger 1, der dreh- und achsfest mit einer Welle, vorzugsweise einer Abtriebswelle 28, verbunden ist.

Jede Kupplung besitzt eine Druckplatte 10;11; 210; 110, die drehfest und axialfest, zumindest in eine Richtung, auf dem Kupplungsträger 1 sitzt. Ein Kupplungsring 3; 5 ist drehfest und gegen eine Druckplatte 10; 11 axial anliegend auf einer Welle bzw. einer Kupplungsglocke 23 gelagert, wodurch auch die Möglichkeit gegeben ist, Kupplungsglocke und Kupplungsring bzw. Kupplungsring und Welle, gegebenenfalls zweckmäßigerweise einteilig auszubilden, um Kosten zu sparen, wie es z.B. Verbindungsmuffe 42 zeigt.

In Fig. 1 ist die Kombination des gesamten Kupplungspaketes 25 mit einem Planetengetriebe 30 in kompakter Bauweise dargestellt, wobei das Hohlrad 43 mit der Kupplungsglocke 23, dem Kupplungsring 3 verbunden und das Sonnenrad 44 des Planetengetriebes mit der Kupplungsglocke 37 der Kupplung 29 gekoppelt ist, z.B. zum Schalten eines Rückwärtsbereiches eines Kraftfahrzeuggetriebes.

Die Schaltkupplung ist auch mit einer Synchronisiereinrichtung 47 ausführbar, insbesondere für die Anwendung in einem automatisch schaltbaren Stufenschaltgetriebe. Je nach der Anforderung an die Synchronisierleistung kann eine Einfachsynchronisierung oder Sperrsynchronisierung angewendet werden. Für niedrige Synchronisierungsleistungen genügt unter Umständen eine mit Feder 45 ausgebildete Synchroneinrichtung, die mit einer vorzugsweise kegelförmigen Synchronisierungsfläche zusammenarbeitet. Die Feder 45 ist drehfest mit dem Kupplungsträger 101 verbunden und wird über den Kolben 40 axial gegen die Kegelreibfläche vor dem Einrücken in das Kupplungsprofil angedrückt. Bei hohen Synchronisieranforderungen ist es möglich, eine Sperrsynchronisierung bekannter Art im gleichen Bauraum vorzusehen.

Der Kolbenraum kann zur schnelleren Entleerung nach dem Ausschalten auch mit einem, ansich bekanntem Entleerungsventil ausgestattet werden, das bei niedrigem Öldruck bzw. bei drucklosem Zustand öffnet.

In Sonderfällen ist diese Kupplung auch mit Luftdruck, oder allgemein mit gasförmigem Druckmittel zu betätigen.

Infolge der niedrigen hydraulischen Leistungen für die Beaufschlagung der Kupplungen kann das gesamte Druckniveau sowie die erforderliche Ölmenge niedriger gehalten werden, als bei bekannten Automatgetrieben mit Lastschaltkupplungen zugunsten einer weiteren Verbesserung des Wirkungsgrades.

Die aufgeführten Variationsmöglichkeiten bieten eine weitgehende Anpassbarkeit an verschiedenste Anforderungen, insbesondere automatisch schaltbarer Kraftfahrzeuggetriebe.

Die beiden Druckplatten 10, 11 bzw. 210, 111 bilden ein gemeinsames Bauteil, das vorzugsweise als Blechprägeteil hergestellt ist. Über Stege, die in Ausnehmungen 17; 117 des Kupplungsträgers 1; 101 eingreifen, sind beide Druckplatten miteinander verbunden. Mit nur einem Sicherungsring 50 sind beide Druckplatten axial fixiert. Die Druckplatte 48, Fig. 1 bzw. 110, Fig. 2 besitzt Mitnehmer 49, die in Ausnehmungen des Kupplungsträgers 1; 101 und gleichzeitig in Ausnehmungen eines Verbindungsgliedes der Welle 33 eingreifen und zwar derart, daß gleichzeitig eine Drehverbindung zwischen Kupplungsträger und Welle 33 hergestellt wird. Ein Sicherungsring 51 dient gleichzeitig für die axiale Fixierung des Kupplungsringes 48; 110 und der axialen Verbindung der Welle 33 mit dem Kupplungsträger 1; 101. Auch die Sintertechnik ist für die Fertigung der Druckplatten, insbesondere bei hohen Stückzahlen sehr wirtschaft-

4

lich anwendbar.

In Figur 5a ist eine weitere Form des Kupplungsprofils dargestellt, das, wie bei Ausführung nach Figur 4, ein Verdrehspiel SV aufweist, jedoch mit dem Unterschied, daß dieses Verdrehspiel im geschalteten Zustand der Kupplung spätestens nach Auftreten einer Drehmomentumkehrung, z.B. durch Gaswegnahme oder Schubverhalten des Fahrzeugs, aufgehoben wird. Zu diesem Zweck besitzt einer der beiden Kupplungsringe, z. B. der Kupplungsring 2, Zahnlücken 317, in diese das Kupplungsprofil mit z.B. Kupplungszähnen 316 des anderen Kupplungsringes 3 spielfrei eingreifen können. Die Zahnlücke 317 wird hierbei vorzugsweise an einem Ende des Verdrehweges SV angebracht und zwar derart, daß in Lastrichtung des Hauptdrehmomentes , Pfeilrichtung Y,die größeren Profilflächen bzw. Mitnahmeflächen 318 der beiden Kupplungsringe drehmomentbelastet sind. Der Kupplungsring 2 nach Figur 5a besitzt also große Mitnahmeflächen 318, die das Hauptdrehmoment aufnehmen und kleine Mitnahmeflächen 314, die in der Regel nur bei Schubbetrieb bzw. bei Gaswegnahme belastet werden und weitere kleine Mitnahmeflächen 313, die bei vollgeschlossener Kupplung, wie dargestellt, frei sind. Der Vorteil dieser Kupplungsausführung nach Figur 5a liegt also darin, daß der Vorteil der guten Schaltbarkeit infolge des Verdrehspieles bzw. des Verdrehweges SV ausgenutzt werden kann und gleichzeitig die Kupplungselemente in geschaltetem Zustand verdrehspielfrei sind. Die Schaltzähne 316 des Kupplungsringes 3 liegen hierbei mit ihren Schrägflächen 314 satt an ihren Gegenflächen des Kupplungsringes 2 an.

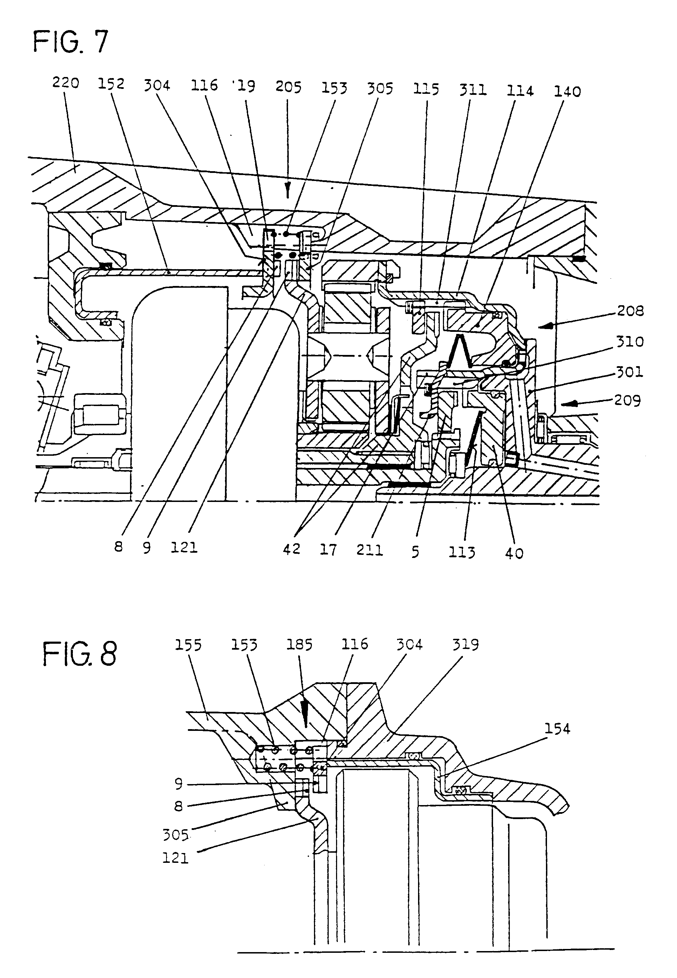

In Figur 7 ist eine Kupplung 205 dargestellt, die ein Getriebeteil, z. B. den Steg 121 eines Planetengetriebes mit dem Gehäuse 220 verbindet. Den Kupplungsträger bildet hier das Gehäuse 220, das den Kupplungsring 304 und die Druckplatte 305 verdrehfest hält. Der Kupplungsring 304 ist axial verschiebbar gegen den Druck einer im Gehäuse gelagerten Feder 153. Ein, aus einem Blechprägeteil gebildeter Kolben 152, der in einem Teil des Gehäuses 220 gelagert ist, dient zum Schließen der Kupplung 205, wobei der Kupplungsring 304 axial verschoben wird und mit seinem Kupplungsprofil 8 in das Gegenprofil 9 des, mit dem Planetenträger 121 verbundenen Kupplungsringes eingreift. Der Kupplungsring 304 ist hierbei vorzugsweise als Blechprägeteil ausgebildet, das mit dem Mitnahmeprofil 19 in Gegenflächen 116 des Gehäuses drehfest eingreift. Die Kupplungsprofile 8 bzw. 9 der beiden Kupplungsringe können beliebig ausgebildet werden, wie in den Figuren 3 bis 5a dargestellt.

Figur 7 zeigt zwei weitere Kupplungen 208 und 209, die zu einem Kupplungspaket zusammengefaßt sind. Der Kupplungsträger 114, der als Blechprägeteil für beide Kupplungen hergestellt ist, ist z.B. mit einem als Hohlrad ausgebildeten Getriebeglied und z. B. mit einer Getriebeabtriebswelle verbunden. Ein Schaltkolben 140 mit Kupplungsprofil ist über ein Mitnahmeprofil drehfest im Kupplungsträger 114 gelagert. Eine Druckplatte 211 der Kupplung 209 durchgreift Ausnehmungen 17 des Kupplungsträgers 114 und bildet gleichzeitig die axiale Fixierung der Rückholfedern der Kupplung 208. Ein Schaltkolben 40 der Kupplung 209 mit Kupplungsprofil ist ebenfalls drehfest über ein in den Kupplungsträger eingeprägtes Mitnahmeprofil 310 gelagert. Die Rückholfeder 113 für den Kolben 40 dient gleichzeitig für den axialen Spielausgleich für mehrere Getriebewellen. Der Kupplungsring auf dem Getriebeglied 42 ist axial geringfügig verschiebbar und wird im ausgeschalteten Zustand gegen den Druck einer Feder so gehalten, daß zwischen Druckplatte 115 und dem Kupplungsring möglichst berührungsfreier Zustand gegeben ist, um Schleppverluste auszuschalten. Der Kupplungsring 5 ist ebenfalls geringfügig axial verschiebbar, um im ausgeschalteten Zustand einen lastlosen Anlauf gegen die Druckscheibe 211 zu gewährleisten und im geschalteten Zustand sich axial anpassen zu können.

In Figur 8 ist eine Schaltkupplung 185 dargestellt zum Verbinden eines Getriebeelementes 121 mit dem Gehäuse 155. Ein Kupplungsring 304 ist mit dem Gehäuse 155 drehfest verbunden. Die Rückholfedern 153 sind im Gehäuse gelagert.

Eine eigene Druckplatte ist nicht erforderlich, da diese durch einen Flansch 305 des Gehäuses 155 ersetzt werden kann. Ein, vorzugsweise als Blechprägeteil ausgebildeter Schaltkolben 154 ist in einem Gehäuseteil 319 gelagert und drückt zum Schalten der Kupplung den Kupplungsring 304 mit seiner Schaltverzahnung bzw. dem Kupplungsprofil 9 gegen das Kupplungsprofil 8 des Getriebeelementes 121 an. Der Kupplungsring 304 ist mit dem Gehäuse 155 über das Profil 116 drehfest und in axialer Richtung verschiebbar gelagert. Diese Kupplungsausführung ist besonders kostengünstig herstellbar.

Bei Anwendung in einem stufenlosen Getriebe mit mehreren Schaltbereichen erfolgt der Impuls für die Bereichsschaltung aus einem Synchronsignal aus dem Synchronlauf der entsprechenden Kupplungselemente oder / und aus einem Signal eines Verstellorgans eines stufenlosen Getriebeteiles, z.B. dem Stellwinkel eines Hydrostataggregates in Abhängigkeit einer dem Synchronlauf entsprechenden Verstellgröße. Synchron-Ungenauigkeiten der Kupplungselemente, bedingt z.B. durch Lecköolverluste eines Hydrostatelementes oder anderem, werden in diesem Kupplungssystem ausgeglichen.

Je nach den konstruktiven Gegebenheiten bzw. baulichen Gegebenheiten des Getriebes, können weitere unterschiedliche Kupplungsausführungen mit diesen erfindungsgemäßen Merkmalen ausgebildet werden, wobei z. B. der Schaltkolben und der Kupplungsring einteilig ausgeführt ist und der Kolbenraum durch ein Blechprägeteil gebildet wird oder im Gehäuse eingearbeitet ist. Diese Ausführungsformen sind in den Zeichnungen nicht dargestellt.

Diese neuartige Schaltkupplung besitzt den weiteren Vorteil, daß die modernen Fertigungsmethoden - Blechtechnik, Sintertechnik und andere - in besonders hohem Maße anwendbar sind, wodurch neben dem Bauraumvorteil große Kostenvorteile durch wirtschaftliche Fertigung erzielt werden.

Bezugszeichen

| | | |
|---|---|---|
| 1 Kupplungsträger | 105 Kupplungsring | 218 Kolbenstützring |
| 2 Kupplungsring | 106 Kupplungsprofil | 219 Kolbenraum |
| 3 Kupplungsring | 107 Kupplungsprofil | 220 Gehäuse |
| 4 Kupplungsring | 108 Kupplungsprofil | |
| 5 Kupplungsring | 109 Kupplungsprofil | 241 Ölzuführung |
| 6 Kupplungsprofil | 110 Druckplatte | 256 Kupplungsprofil |
| 7 Kupplungsprofil | 111 Druckplatte | 257 Kupplungsprofil |
| 8 Kupplungsprofil | 112 Feder | 301 |
| 9 Kupplungsprofil | 113 Feder | 302 Kupplungsring |
| 10 Druckplatte | 114 Kupplungsträger | 303 Kupplungsring |
| 11 Druckplatte | 115 Druckplatte | 304 Kupplungsring |
| 12 Feder | 116 Trägerprofil | 305 Druckplatte |
| 13 Feder | 117 Ausnehmung | 306 Kupplungsprofil |
| 14 Kolben | 118 | 307 Kupplungsprofil |
| 15 Kolben | 119 Mitnehmer | 308 Kupplungsprofil |
| 16 Ausnehmung | 120 Mitnehmer | 309 Kupplungsprofil |
| 17 Ausnehmung | 121 Planetenträger | 310 Mitnahmeprofil |
| 18 Mitnehmer | 140 Kolben / Schaltkolben | 311 Mitnahmeprofil |
| 19 Mitnehmer | 141 | 312 Profilflächen |
| 20 Mitnehmer | 142 Kupplungsglied | 313 Profilflächen |
| 21 Profilfläche | 150 Kolbenraum | 314 Kupplungsprofil |
| 22 Profilfläche | 151 Kolbenraum | 315 Kupplungsprofil |
| 23 Kupplungsglocke | 152 Kolben | 316 Schaltzähne |
| 24 Abweisflächen | 153 Feder | 317 Zahnlücke |
| 25 Kupplungspaket | 154 Kolben | 318 Mitnahmeflächen |
| 26 Kupplung | 155 Gehäuse | 319 Gehäuseteil |
| 27 Kupplung | 156 Kupplungsprofil | 324 Zahnkopfrundung |
| 28 Kupplung | 157 Kupplungsprofil | |
| 29 Kupplung | 158 Kupplungsprofil | SU Verdrehweg |
| 30 Planetentrieb | 159 Kupplungsprofil | SA Kupplungsweg |
| 31 Hohlwelle | 180 Rückstellfeder | α Winkel |
| 32 Welle | 181 Feder | |
| 33 Welle | 182 Federschenkel | S1 Schaltweg |
| 36 Arretierungsring | 183 Feder | S2 Schaltweg |
| 37 Kupplungsglocke | 184 Feder | |
| 38 Mitnehmer | 185 Kupplung | |
| 39 Sicherungsring | 203 Kupplungsring | |
| 40 Kolben | 204 Kupplungsring | |
| 41 Ölzuführung | 205 Kupplung | |
| 42 Verbindungsmuffe | 206 Kupplungsprofil | |
| 43 Hohlrad | 207 Kupplungsprofil | |
| 44 Sonnenrad | 208 Kupplung | |
| 45 Feder (Synchronisierung) | 209 Kupplung | |
| 46 Feder | 210 Druckplatte | |
| 47 Synchronisiereinrichtung | 211 Druckplatte | |
| 48 Druckplatte | 213 Druckfeder | |
| 49 Mitnehmer | 214 Kolben | |
| 50 Sicherungsring | 215 Kolben | |
| 51 Sicherungsring | 216 Kolbenstützring | |
| 101 Kupplungsträger | 217 Kolbenraum | |
| 102 Kupplungsring | | |
| 103 Kupplungsring | | |
| 104 Kupplungsring | | |

**Patentansprüche**

1. Schaltkupplung mit einer gleichzeitg form- und kraftschlüssig wirkenden Kupplungseinrichtung mit einem auf einem rotierenden Getriebeteil drehfest und achsfest angeordneten Kupplungsträger (1; 101; 201; 301; 155; 220), auf dem ein drehfester und axial verschiebbarer Kupplungsring (2; 5; 40; 104; 103; 204; 140; 102) gelagert ist, der durch eine mit einem Druckmittel beaufschlagbare, auf dem Kupplungsträger angeordnete Kolbenfläche (Kolben 14; 15; 40; 214; 215; 140) axial verschiebbar und mit einem entsprechenden Kupplungsring (3; 5; 42; 103) verbindbar ist, wobei die Kupplungsringe mit einem Kupplungsprofil (6; 7; 8; 9; 206; 207; 256; 257; 106; 107; 108; 109) versehen sind, das so ausgebildet ist, daß im geschlossenen Zustand eine axiale, voneinander abweisende Kraftkomponente in Abhängigkeit vom Drehmoment erzeugt wird, wobei die abweisende axiale Kraftkomponente so groß ist, daS die Kupplung bei Wegnahme des Schaltdruckes unter Last öffnet,
   **dadurch gekennzeichnet,** daß die Kupplung als Schaltelement eines automatischen Kraftfahrzeuggetriebes aus mindestens zwei schaltbaren Einzelkupplungen besteht, und daß das Getriebeschalten bei Synchronlauf der beiden Hälften der jeweils zu schließenden Einzelkupplung erfolgt, indem bei besagtem Synchronlauf ein Steuersignal zum Ineinandergreifen der beiden Hälften der Einzelkupplung ausgelöst wird.

2. Schaltkupplung nach Anspruch 1
   **dadurch gekennzeichnet,** daß bei Anwendung in einem stufenlosen Getriebe zwei Einzelkupplungen derart geschaltet werden, daß vor Öffnen einer im Eingriff befindlichen Einzelkupplung die jeweils zu schließende Einzelkupplung bzw. Folgekupplung angesteuert und in Eingriff gebracht wird.

3. Schaltkupplung nach Anspruch 1
   **dadurch gekennzeichnet,** daß das Schaltsignal aus einem Synchronsignal bzw. Drehzahlvergleichssignal oder einer entsprechenden Stellung eines Verstellorgans des stufenlosen Getriebeelementes resultiert.

4. Schaltkupplung nach Anspruch 1 und 3
   **dadurch gekennzeichnet,** daß das Öffnungssignal einer Einzelkupplung aus dem Schaltdruck der Folgekupplung resultiert oder/und daß das Öffnungssignal zum Öffnen der geschalteten Kupplung zeitabhängig nach einem Schließsignal der Folgekupplung erfolgt,

5. Schaltkupplung nach Anspruch 1 bis 4
   **dadurch gekennzeichnet,** daß die Einzelkupplungen (26, 27, 28, 29; 326, 327; 208, 209) radial übereinander oder/und nebeneinander angeordnet sind.

6. Schaltkupplung nach Anspruch 1 bis 5
   **dadurch gekennzeichnet,** daß dem auf dem Kupplungskörper (201) gelagerten Druckkolben (215; 214) zwei Druckkolbenräume (151, 219 bzw 150, 217) zugeordnet sind, wobei der eine Kolbenraum (151; 150) zum Schließen der Kupplung und der andere Kolbenraum (219; 217) zur Rückführung des Kolbens (215; 214) und somit zum Öffnen der Kupplung dient (Figur 6).

7. Schaltkupplung nach Anspruch 1 bis 6
   **dadurch gekennzeichnet,** daß das Kupplungsprofil (6; 7;8; 9; 108; 109; 158; 159; 306; 307; 308) oder/und das Mitnehmerprofil (16; 18; 19; 310; 311) der Kupplungsglieder (3; 23; 4; 42; 114; 5; 140; 40; 2; 3) ganz oder teilweise spanlos, bevorzugt als Blechprägeteil, Schmiedeteil oder Feingußteil hergestellt sind.

8. Schaltkupplung nach einem der Ansprüche 1 bis 7,
   dadurch **gekennzeichnet**, daß das Kupplungsprofil (6 und 7) so ausgebildet ist, daß ein definiertes Verdrehspiel (SV) zwischen den Mitnahmeflächen des Kupplungsprofils gegeben ist (Fig. 3 und 4).

9. Schaltkupplung nach Anspruch 1,
   dadurch **gekennzeichnet**, daß eine Rückstellfeder (12, 13, 112, 113, 213, 153) vorgesehen ist zum vollen oder teilweisen Auskuppeln des Kupplungsringes (2, 4, 102, 104, 302, 304) und zum Zurückführen des Kolbens (14, 15, 40, 140, 152, 154) in seine Neutrallage.

10. Schaltkupplung nach einem der Ansprüche 1 bis 10,
dadurch **gekennzeichnet**, daß der Kupplungsring (103, 105, 203) beidseitig mit einem Kupplungsprofil (107, 157, 109, 159, 207, 257) versehen ist und die Druckplatte (110, 111, 210) mit entsprechendem Kupplungsprofil (156, 158, 256) ausgebildet ist (Fig. 2).

11. Schaltkupplung nach Anspruch 1,
dadurch **gekennzeichnet**, daß der Kolben (214, 215) doppelseitig beaufschlagbar ist und ein Kolbenraum (217, 219) vorgesehen ist zur Rückführung des Kolbens in die Neutrallage (Fig. 6).

12. Schaltkupplung nach einem der Ansprüche 1 bis 11,
dadurch **gekennzeichnet**, daß der Druck für die Rückstellung des Kolbens gleichzeitig der Druck der Folgekupplung ist.

13. Schaltkupplung nach einem der Ansprüche 1 bis 12,
dadurch **gekennzeichnet**, daß der Druck für die Rückstellung des Kolbens ein Dauerdruck ist, der niedriger als der Schaltdruck ist.

14. Schaltkupplung nach einem der Ansprüche 1 bis 13,
dadurch **gekennzeichnet**, daß der Druck für die Rückstellung des Kolbens ein Dauerdruck ist, der in der Schaltphase kurzzeitig angehoben wird zum spontanen Öffnen der Kupplung.

15. Schaltkupplung nach einem der Ansprüche 1 bis 14,
dadurch **gekennzeichnet**, daß das Signal zum Öffnen der Kupplung innerhalb der Schaltphase von einem in den anderen Schaltbereich aus dem Druck der Folgekupplung resultiert.

16. Schaltkupplung nach Anspruch 1 und 6,
dadurch **gekennzeichnet**, daß das Signal zum Öffnen der Kupplung, in ansich bekannter Weise, über ein Drucksignal der Folgekupplung kommt, durch das auf hydraulischen Wege über ein zusätzliches Ventil ein Druck im Kolbenraum (217, 219) erzeugt wird.

17. Schaltkupplung nach einem der Ansprüche 1 bis 16,
dadurch **gekennzeichnet**, daß das Öffnungssignal zur Rückführung des Kolbens in Neutrallage über eine, in ansich bekannte elektrische Rückmeldung aus dem Druck der Folgekupplung auf die elektronische Regel- und Steuereinrichtung erfolgt, wonach über die Elektronik das Kupplungsventil angesteuert wird, derart, daß spontan der Kupplungsdruck der auszuschaltenden Kupplung abbricht.

18. Schaltkupplung nach einen der Ansprüche 1 bis 17,
dadurch **gekennzeichnet**, daß die Rückstellung des Kolbens nur über eine Druck im Rückstellkolbenraum (217, 219) erfolgt und Rückstellfedern (12, 213) entfallen.

19. Schaltkupplung nach mehreren der Ansprüche 1 bis 18,
dadurch **gekennzeichnet**, daß eine Feder (183, 181, 283) eingebaut ist, die den Kupplungsring (103, 105, 203) in Neutrallage hält bzw. nach Auskuppeln in Neutrallage zurückführt (Fig. 2).

20. Schaltkupplung nach einem der Ansprüche 1 bis 19,
dadurch **gekennzeichnet**, daß das Kupplungsprofil (107, 157, 106, 156) als Stirnbogenverzahnung oder als Geradverzahnung oder als Kegelverzahnung ausgebildet ist.

21. Schaltkupplung nach einem der Ansprüche 1 bis 20,
dadurch **gekennzeichnet**, daß der Kupplungsträger (301) mit ienem als Blechprägeteil ausgebildeten Kolbenträger (114) mit eingeprägtem Mitnahmeprofil (310, 311) für zwei Kupplungen (208, 209) ausgestattet ist und die Kupplungen (208, 209) übereinander angeordnet sind (Fig. 7).

22. Schaltkupplung nach einem der Ansprüche 1 bis 21,
dadurch **gekennzeichnet**, daß einer der beiden Kupplungsringe (2, 3) ein niedriges Kupplungsprofil (315) und ein hohes Kupplungsprofil (314) besitzt und daß nach einem ersten Schaltweg "S1" eine Drehmomentmitnahme bei einem definierten Verdrehspiel bzw. Verdrehweg (SV"zwischen den beiden Kupplungsringen (2 und 3, Fig. 5a) in Bezug auf beide Drehmomentrichtungen möglich ist und nach einem größeren Schaltweg "S2" der Verdrehweg "SV" aufgehoben ist.

**23.** Schaltkupplung nach einem der Ansprüche 1 bis 22,
dadurch **gekennzeichnet,** daß der Kolben (14) und der Kupplungsring (2) zwei getrennte Bauteile sind.

**24.** Schaltkupplung nach einem der Ansprüche 1 bis 23,
dadurch **gekennzeichnet**, daß der Druckkolben (40, 215, 240) und der Kupplungsring (204) einteilig ausgebildet sind.

**25.** Schaltkupplung nach mehreren der Ansprüche 1 bis 24,
dadurch **gekennzeichnet**, daß der Kupplungsring (2, 3, 104, 105) ein Verdrehspiel (nicht dargestellt) aufweist und bei ausgekuppeltem Zustand durch eine Feder (180, 181) in Neutralstellung gehalten wird, so daß beim Schalten der Kupplung eine begrenzte Verdrehung des Kupplungsringes möglich ist.

**26.** Schaltkupplung nach einem der Ansprüche 1 bis 25,
dadurch **gekennzeichnet**, daß mehr als zwei Kupplungen (26, 27, 28, 29, 208, 209) zu einem Kupplungspaket zusammengefaßt sind (Fig. 1, 2, 6 und 7) und der Kupplungsträger (1, 101, 201) ein gemeinsames Kupplungsglied darstellt.

**27.** Schaltkupplung nach mehreren der Ansprüche 1 bis 26,
dadurch **gekennzeichnet**, daß der Kolben (40, 204, 140) mit dem dazugehörigen Kupplungsring als ein Bauteil ausgebildet ist.

**28.** Schaltkupplung nach einem der Ansprüche 1 bis 27,
dadurch **gekennzeichnet**, daß der Kupplungsträger (1, 101, 201) mit einer Welle (33) dreh- und achsfest verbunden ist, über diese die gemeinsame Ölzuführung für die auf dem Kupplungsträger angeordneten Kupplungen erfolgt.

**29.** Schaltkupplung nach einem der Ansprüche 1 bis 28,
dadurch **gekennzeichnet**, daß die Kupplungseinrichtung eine Synchronisiereinrichtung (47) enthält, und daß die Synchronisiereinrichtung als Einfachsynchronisierung oder als Sperrsynchronisierung (nicht dargestellt) ausgebildet ist (Fig. 2).

**30.** Schaltkupplung nach mehreren der Ansprüche 1 bis 29,
dadurch **gekennzeichnet**, daß der Kolbendruckraum für die Druckkolben (14, 15, 40, 214, 315) mit einem Entleerungsventil, wie ansich bekannt, in Verbindung steht zur schnelleren Entleerung des Kolbenraumes nach Wegnahme des Steuerdruckes (nicht dargestellt).

**31.** Schaltkupplung nach einem der Ansprüche 1 bis 30,
dadurch **gekennzeichnet**, daß die Druckplatte (10, 11, 210, 111) ein gemeinsames Bauteil für zwei Kupplungen (26 und 27) bildet.

**32.** Schaltkupplung nach einem der Ansprüche 1 bis 31,
dadurch **gekennzeichnet**, daß die Druckplatte (48) Mitnehmer (49) besitzt, die in Ausnehmungen des Kupplungsträgers (1, 101) und in Ausnehmungen eines Verbindungsgliedes der Welle (33) eingreifen, derart, daß eine Drehverbindung zwischen Kupplungsträger (1, 101) und der Welle (33) hergestellt ist.

**Claims**

**1.** Clutch mechanism including a clutch device operative at the same time in a positive manner and by adhesion, comprising a clutch support (1; 101; 201; 301; 155; 220) arranged for rotation and fixed to the axle on a rotating transmission element, on which support is supported a clutch ring (2; 5; 40; 104; 103; 204; 140; 102) for rotation and axial displacement, which is adapted to be connected for axial displacement by a piston (14; 15; 40; 214; 215; 140), which is accommodated on said clutch support and which is adapted for being operated by means of a pressurized fluid and which has a mating clutch ring (3; 5; 42; 103), wherein said clutch rings have a clutch profile (6; 7; 8; 9; 206; 207; 256; 257; 106; 107; 108; 109) shaped such that in closed condition an axial deflecting force component is generated as a function of the torque and that said axial deflecting force component becomes so great that the clutch opens when the gear-changing pressure is removed in loaded state,

**characterized** in that the clutch mechanism as a control element of an automatic motor vehicle transmission consists of at least two selectable individual clutches, and that the clutch mechanism is operated when both halves of the individual clutch to be closed respectively function in synchronized operation, by triggering a control signal for bringing the two halves of the individual clutch into mesh with said synchronized operation.

2. Clutch mechanism according to Claim 1,
**characterized** in that in application in an infinitely variable transmission two individual clutches are so operated that prior to opening of an engaged individual clutch the individual clutch to be respectively closed or the following clutch, respectively, is selected and engaged.

3. Clutch mechanism according to Claim 1,
**characterized** in that the clutch control signal derives from a synchronization signal or a speed comparison signal, respectively, or from a corresponding position of an adjustment element of the element of the infinitely variable transmission.

4. Clutch mechanism according to Claims 1 and 3,
**characterized** in that the opening signal of an individual clutch derives from the clutch control pressure of the following clutch or/and that said opening signal is issued for opening the operated clutch as a function of time after a closing signal for the following clutch.

5. Clutch mechanism according to Claims 1 to 4,
**characterized** in that said individual clutches (26, 27, 28, 29; 326, 327; 208, 209) are radially arranged in superimposed or/and side-by-side relationship.

6. Clutch mechanism according to Claims 1 to 5,
**characterized** in that two pressure piston spaces (151, 219 or 150, 217) are associated with the pressure piston (215; 214) supported on the clutch body (201), whereof one space (151; 150) serves to close the clutch while the other one (219; 217) serves to return the piston (215; 214) and hence to open the clutch (Figure 6).

7. Clutch mechanism according to Claims 1 to 6,
**characterized** in that the clutch profile (6; 7; 8; 9; 108; 109; 158; 159; 306; 307; 308) or/and the driver profile (16; 18; 19; 310; 311) of the clutch elements (3; 23; 4; 42; 114; 5; 140; 40; 2; 3) are manufactured, either completely or in part, by a non-cutting operation, preferably as sheet stamping, forging or precision casting.

8. Clutch mechanism according to any of the Claims 1 to 7,
**characterized** in that the clutch profile (6 and 7) is designed in such a manner that there is a defined torsion clearance (SV) between the driving surfaces of the clutch profile (Figs. 3 and 4).

9. Clutch mechanism according to Claim 1,
**characterized** in that a spring (12, 13, 112, 113, 213, 153) is provided for complete or partial disengagement of the clutch ring (2, 4, 102, 104, 302, 304) and for returning the piston (14, 15, 40, 140, 152, 154) into its neutral position.

10. Clutch mechanism according to the Claims 1 to 10,
**characterized** in that said clutch ring (103, 105, 203) has a clutch profile (107, 157, 109, 159, 207, 257) on its both sides, and that the pressure plate (110, 111, 210) has a mating clutch profile (156, 158, 256) (Fig. 2).

11. Clutch mechanism according to Claim 1,
**characterized** in that the piston (214, 215) is adapted to be operated on both sides, and that a piston space (217, 219) is provided for the return of the piston into its neutral position (Fig. 6).

12. Clutch mechanism according to the Claims 1 to 11,
**characterized** in that the pressure for returning the piston is at the same time the pressure of the following clutch.

**13.** Clutch mechanism according to the Claims 1 to 12,
**characterized** in that the pressure for returning the piston is a continuous pressure lower than the control pressure.

**14.** Clutch mechanism according to the Claims 1 to 13,
**characterized** in that the pressure for returning the piston is a continuous pressure which is increased for a short period during the changing phase for spontaneous opening of the clutch.

**15.** Clutch mechanism according to the Claims 1 to 14,
**characterized** in that the signal for opening the clutch within the speed changing range from the pressure of the following clutch.

**16.** Clutch mechanism according to the Claims 1 and 6,
**characterized** in that the signal for opening the clutch is transmitted, in a manner known per se, by a pressure signal of the following clutch, by which signal a pressure is established in the piston space (217, 219) by hydraulic means through an additional valve.

**17.** Clutch mechanism according to any of the Claims 1 to 16,
**characterized** in that the opening signal for returning the piston into its neutral position is transmitted by an electric feedback known per se, which derives from the pressure of the following clutch, to the electronic regulating and control means, whereupon the clutch valve is operated through the electronic system in a manner that the clutch pressure of the clutch to be rendered inoperative is spontaneously cut off.

**18.** Clutch mechanism according to any of the Claims 1 to 17,
**characterized** in that piston is returned only through a pressure in said return piston space (217, 219), and that return springs (12, 213) are dispensed with.

**19.** Clutch mechanism according to several ones of Claims 1 to 18,
**characterized** in that a spring (183, 181, 283) is included for maintaining said clutch ring (103, 105, 203) in its neutral position or respectively for returning it into its neutral position upon disengagement (Fig. 2).

**20.** Clutch mechanism according to any of the Claims 1 to 19,
**characterized** in that the clutch profile (107, 157, 106, 156) is designed as cylindrical Palloid toothing or spur toothing or conical toothing.

**21.** Clutch mechanism according to any of the Claims 1 to 20,
**characterized** in that said clutch support (301) is provided with a piston support (114) in the form of a sheet stamping having a stamped driving profile (310, 311) for two clutches (208, 209), and in that said clutches (208, 209) are disposed in superimposed relationship (Fig. 7).

**22.** Clutch mechanism according to any of the Claims 1 to 21,
**characterized** in that one of said two clutch rings (2, 3) presents a low clutch profile (315) and a high clutch profile (314), and in that, after a first travel "S1" of operation, a drive by torque is possible at a defined torsion clearance or torsion travel "SV" between said two clutch rings (2 and 3, Fig. 5a) relative to the two torque directions, and that the torsion travel "SV" is neutralized after a longer travel "S2" of operation.

**23.** Clutch mechanism according to any of the Claims 1 to 22,
**characterized** in that the piston (14) and the clutch ring (2) are two separate components.

**24.** Clutch mechanism according to any of the Claims 1 to 23,
**characterized** in that the pressure piston (40, 215, 240) and the clutch ring (204) present an integral configuration.

25. Clutch mechanism according to several ones of Claims 1 to 24,
    **characterized** in that said clutch ring (2, 3, 104, 105) presents a torsion clearance (not illustrated) and is maintained, in the disengaged state, by a spring (190, 181) in its neutral position such that when the clutch is operated a limited torsion of the clutch ring is possible.

26. Clutch mechanism according to any of the Claims 1 to 25,
    **characterized** in that more than two clutches (26, 27, 28, 29, 208, 209) are combined to form one clutch block (Figs. 1, 2, 6 and 7), and in that said clutch support (1, 101, 201) constitutes a common clutch element.

27. Clutch mechanism according to several ones of Claims 1 to 26,
    **characterized** in that said piston (40, 204, 140) together with the associated clutch ring is configured as one component.

28. Clutch mechanism according to any of the Claims 1 to 27,
    **characterized** in that said clutch support (1, 101, 201) is connected to a shaft (33) for rotation and fixed to the axle through which is realized the common oil supply for the clutches arranged on the clutch support.

29. Clutch mechanism according to any of the Claims 1 to 28,
    **characterized** in that the clutch mechanism comprises synchronising means (47), and that said synchronizing means are designed as plain synchronizers or as locking synchronizers (not illustrated) (Fig. 2).

30. Clutch mechanism according to several ones of Claims 1 to 29,
    **characterized** in that the pressure chamber in the piston for the pressure pistons (14, 15, 40, 214, 315) communicates, in a manner known per se, with a discharge valve for accelerated discharge of the piston chamber upon cutoff of the control pressure (not illustrated).

31. Clutch mechanism according to any of the Claims 1 to 30,
    **characterized** in that the pressure plate (10, 11, 210, 111) constitutes a common component shared by two clutches (26 and 27).

32. Clutch mechanism according to any of the Claims 1 to 31,
    **characterized** in that the pressure plate (48) presents drivers (49) meshing with recesses in the clutch support (1, 101) and in recesses of a connecting element of the shaft (33) in such a manner that a rotational connexion is established between said clutch support (1, 101) and the shaft (33).

**Revendications**

1. Embrayage à dispositif d'embrayage commandé par adhérence et en même temps à crabot, comprenant un support d'embrayage (1; 101; 201; 301; 155; 220) disposé, pour rotation et solidaire de l'axe, sur un élément de transmission tournant, sur lequel support est logé un anneau embrayeur (2; 5; 40; 104; 103; 204; 140; 102) pour rotation et déplacement axial, qui se peut raccorder pour déplacement axial par un piston (14; 15; 40; 214; 215; 140), qui est logé sur ledit support d'embrayage et qui peut être commandé par un fluide sous pression, et à un anneau embrayeur correspondant (3; 5; 42; 103), lesdits anneaux embrayeurs présentant un profil d'embrayage (6; 7; 8; 9; 206; 207; 256; 257; 106; 107; 108; 109) si formé qu'en état fermé une composante de force axiale à déflection soit générée en fonction du moment de couple et ladite composante de force axiale à déflection devienne si grande que l'embrayage s'ouvre quand la pression de changement est coupée en charge,
   **caractérisé** en ce que l'embrayage, étant un élément de commande d'une transmission automatique d'un véhicule automobile, est composé d'au moins deux dispositifs d'embrayage individuels, et en ce que l'embrayage est commandé en marche synchronisée desdites deux moitiés du dispositif d'embrayage individuel respectivement à fermer, en déclanchant un signal de changement pour l'engrenage desdites deux moitiés du dispositif d'embrayage individuel en marche synchronisé.

2. Embrayage selon la revendication 1,
   **caractérisé** en ce qu'à l'application dans une transmission à réglage continu deux dispositifs d'embrayage individuels sont commandé de façon qu'avant l'ouverture d'un dispositif d'embrayage individuel en engrenage le dispositif d'embrayage individuel à fermer respectivement ou l'embrayage suivant est sélectionné et mis en prise.

3. Embrayage son la revendication 1,
   **caractérisé** en ce que le signal de changement résulte d'un signal de synchronisation ou d'un signal de comparaison de vitesses, ou d'une position correspondante d'un élément de réglage dudit élément de transmission à réglage continu.

4. Embrayage selon les revendications 1 et 3,
   **caractérisé** en ce que le signal d'ouverture d'un dispositif d'embrayage individuel résulte de la pression de changement de l'embrayage suivant ou/et que le signal d'ouverture est sorti pour l'ouverture de l'embrayage commandé en fonction du temps après un signal de fermeture de l'embrayage suivant.

5. Embrayage son les revendications 1 à 4,
   **caractérisé** en ce que lesdits dispositifs d'embrayage individuels (26, 27, 28, 29; 326, 327; 208, 209) sont disposés radialement l'un sur l'autre ou/et côté à côté.

6. Embrayage selon les revendications 1 à 5,
   **caractérisé** en ce que deux logements de piston de pression (151, 219 ou 150, 217) sont affectés au piston de pression (215; 214) logé sur le corps d'embrayage (201), dont l'un logement (151; 150) sert à fermer l'embrayage et l'autre (219; 217) au rappel du piston (215; 214) et donc à ouvrir l'embrayage (figure 6).

7. Embrayage selon les revendications 1 à 6,
   **caractérisé** en ce que le profil d'embrayage (6; 7; 8; 9; 108; 109; 158; 159; 306; 307; 308) ou/et le profil d'entraîneur (16; 18; 19; 310; 311) des éléments d'embrayage (3; 23; 4; 42; 114; 5; 140; 40; 2; 3) sont fabriqué, complètement ou en partie, par formage, de préférence comme pièce frappée en tôle, pièce forgée ou pièce coulée de précision.

8. Embrayage selon une quelconque des revendications 1 à 7,
   **caractérisé** en ce que le profil d'embrayage (6 et 7) est formé de façon qu'il y a un jeu de torsion défini (SV) entre les pentes d'entraîneur du profil d'embrayage (fig. 3 et 4).

9. Embrayage selon la revendication 1,
   **caractérisé** en ce qu'un ressort (12, 13, 112, 113, 213, 153) est prévu pour le désembrayage complet ou partiel de l'anneau embrayeur (2, 4, 102, 104, 302, 304) et pour ramener le piston (14, 15, 40, 140, 152, 154) dans sa position neutre.

10. Embrayage selon les revendications 1 à 10,
    **caractérisé** en ce que ledit anneau d'embrayage (103, 105, 203) présente un profil d'embrayage (107, 157, 109, 159, 207, 257) sur ses deux faces, et que la plaque de pression (110, 111, 210) présente un profil d'embrayage correspondant (156, 158, 256) (fig. 2).

11. Embrayage selon la revendication 1,
    **caractérisé** en ce que le piston (214, 215) peut être commandé à double face, et qu'un logement de piston (217, 219) est prévu pour ramener le piston dans sa position neutre (fig. 6).

12. Embrayage selon les revendications 1 à 11,
    **caractérisé** en ce que la pression pour le rappel du piston est en même temps la pression de l'embrayage suivant.

13. Embrayage selon les revendications 1 à 12,
    **caractérisé** en ce que la pression pour le rappel du piston est une pression continue inférieure à la pression de changement.

**14.** Embrayage selon les revendications 1 à 13,
**caractérisé** en ce que la pression pour le rappel du piston est une pression continue qui est augmentée pour une courte durée dans la phase de changement pour l'ouverture spontanée de l'embrayage.

**15.** Embrayage selon les revendications 1 à 14,
**caractérisé** en ce que le signal pour ouvrir l'embrayage au cours de la phase de changement dans l'autre régime de vitesse résulte de la pression de l'embrayage suivant.

**16.** Embrayage selon les revendications 1 et 6,
**caractérisé** en ce que le signal pour ouvrir l'embrayage est transmis, de façon connue en soi, par un signal de pression de l'embrayage suivant, au moyen duquel une pression est établie dans le logement de piston (217, 219) de manière hydraulique par une soupape supplémentaire.

**17.** Embrayage selon une quelconque des revendications 1 à 16,
**caractérisé** en ce que le signal d'ouverture pour le rappel du piston dans sa position neutre est transmis par une réponse électrique connue en soi, qui résulte de la pression de l'embrayage suivant, au dispositif de réglage et commande électronique, après quoi la soupape d'embrayage est commandée par le système électronique de façon que la pression d'embrayage de l'embrayage à rendre inopératif est tronquée spontanément.

**18.** Embrayage selon une quelconque des revendications 1 à 17,
**caractérisé** en ce que le rappel du piston se fait seulement par une pression dans le logement de rappel du piston (217, 219), et que des ressorts de rappel (12, 213) ne sont pas requis.

**19.** Embrayage selon plusieurs des revendications 1 à 18,
**caractérisé** en ce qu'un ressort (183, 181, 283) est intégré pour tenir ledit anneau d'embrayage (103, 105, 203) dans sa position neutre ou respectivement pour le ramener dans sa position neutre après une opération de désembrayage (fig. 2).

**20.** Embrayage selon une quelconque des revendications 1 à 19,
**caractérisé** en ce que le profil d'embrayage (107, 157, 106, 156) est formé comme denture spirale frontale ou denture droite ou engrenage conique.

**21.** Embrayage selon une quelconque des revendications 1 à 20,
**caractérisé** en ce que ledit support d'embrayage (301) est équipé d'un support de piston (114) en forme d'une pièce frappée en tôle à profil entraîneur empreint (310, 311) pour deux dispositifs d'embrayage (208, 209), et en ce que les dispositifs d'embrayage (208, 209) sont disposés l'un sur l'autre (fig. 7).

**22.** Embrayage selon une quelconque des revendications 1 à 21,
**caractérisé** en ce qu'un desdits des anneau embrayeurs (2, 3) présente un profil d'embrayage de faible hauteur (315) et un profil d'embrayage d'hauteur élevée (314), et en ce qu'après une première course de commande "S1" un entraînement par couple à un jeu de torsion ou course de torsion "SV" défini entre lesdits deux anneaux embrayeurs (2 et 3, fig. 5a), relativement aux deux sens de couple, est possible, pendant que la course de torsion "SV" est neutralisée après une course de commande plus longue "S2".

**23.** Embrayage selon une quelconque des revendications 1 à 22,
**caractérisé** en ce que le piston (14) et l'anneau embrayeur (2) sont deux éléments séparés.

**24.** Embrayage selon une quelconque des revendications 1 à 23,
**caractérisé** en ce que le piston de pression (40, 215, 240) et l'anneau embrayeur (204) sont cofigurés en une partie.

**25.** Embrayage son plusieurs des revendications 1 à 24,
**caractérisé** en ce que ledit anneau embrayeur (2, 3, 104, 105) présente un jeu de torsion (non illustré) et, en etat débrayé, est tenu par un ressort (190, 181) dans sa position neutre de façon qu'au changement de l'embrayage une torsion limitée de l'anneau embrayeur est possible.

26. Embrayage selon une quelconque des revendications 1 à 25,
**caractérisé** en ce que plus de deux dispositifs d'embrayage (26, 27, 28, 29, 208, 209) sont combinés dans un bloc d'embrayage (fig. 1, 2, 6 et 7), et en ce que le support d'embrayage (1, 101, 201) constitue un élément d'embrayage commun.

27. Embrayage selon plusieurs des revendications 1 à 26,
**caractérisé** en ce que ledit piston (40, 204, 140) ensemble avec l'anneau embrayeur y appartenant est configuré comme un élément de construction.

28. Embrayage selon une quelconque des revendications 1 à 27,
**caractérisé** en ce que ledit support d'embrayage (1, 101, 201) est relié, pour rotation et solidairement de l'axe, à un arbre (33) par lequel de l'huile est amenée en commun pour les dispositifs d'embrayage disposé sur ledit support d'embrayage.

29. Embrayage selon une quelconque des revendications 1 à 28,
**caractérisé** en ce que le dispositif d'embrayage comprend des moyens de synchronisation (47), et en ce que lesdits moyens de synchronisation sont configurés comme moyens de synchronisation simples ou moyens de synchronisation à arrêt (non illustré) (fig. 2).

30. Embrayage selon plusieurs des revendications 1 à 29,
**caractérisé** en ce que la chambre de pression dans les piston pour les pistons de pression (14, 15, 40; 214, 315) se trouve en communication, de façon connue en soi, avec une soupape de vidange pour le vidange plus rapide de l'intérieur des piston quand la pression de commande est coupée (non illustré).

31. Embrayage selon une quelconque des revendications 1 à 30,
**caractérisé** en ce que la plaque de pression (10, 11, 210, 111) constitue un élément de construction commun pour deux dispositifs d'embrayage (26 et 27).

32. Embrayage selon une quelconque des revendications 1 à 31,
**caractérisé** en ce que la plaque de pression (48) présente des entraîneurs (49) qui s'engrènent dans des creux du support d'embrayage (1, 101) et dans des creux d'un élément de raccord de l'arbre (33) de façon à établir une connexion à rotation entre ledit support d'embrayage (1, 101) et l'arbre (33).

FIG. 1

FIG. 2

FIG 3

FIG. 4

FIG. 5

FIG. 5a

## FIG.6

## FIG. 7

## FIG. 8